# EUROPÄISCHE PATENTANMELDUNG

(11) **EP 4 592 242 A1**
(43) Veröffentlichungstag der Anmeldung: **30.07.2025**
(21) Anmeldenummer: 24020043.6
(22) Anmeldetag: 29.01.2024
(51) Int. Cl.: C01B 3/38, F01K 23/10, F22B 1/18, F22G 1/12

(54) **VERFAHREN UND EINE ANLAGE ZUR DAMPFREFORMIERUNG**

(71) Anmelder: Linde GmbH, 82049 Pullach (DE)
(72) Erfinder: Heinzel, Albrecht, 82049 Pullach (DE); Reinke, Michael, 82049 Pullach (DE)
(74) Vertreter: Fischer, Werner

(57) **Zusammenfassung**

Es wird ein Verfahren zur Dampfreformierung vorgeschlagen, das ein Umsetzen eines oder mehrerer Kohlenwasserstoffe (1) und Dampf (2) in einem Reformierreaktor (108), ein Beheizen des Reformierreaktors (108) durch Verbrennen eines Brennstoffs (5), und ein Ausleiten von Rauchgas aus dem einen oder den mehreren Reformierreaktoren (110) über ein Rauchgassystem (110, 120) umfasst, wobei das Rauchgassystem (110, 120) einen ersten Rauchgasweg (110) und einen zweiten Rauchgasweg (120) umfasst, und wobei das ausgeleitete Rauchgas wahlweise durch den ersten Rauchgasweg (110) und/oder den zweiten Rauchgasweg (120) geführt wird. Eine entsprechende Anlage (100) zur Dampfreformierung wird ebenfalls vorgeschlagen.

## Beschreibung

Die Erfindung betrifft ein Verfahren und eine Anlage zur Dampfreformierung.

### Hintergrund

Bei der Dampfreformierung wird ein kohlenwasserstoffhaltiger Einsatz (beispielsweise Erdgas, Flüssiggas oder Naphtha) in Gegenwart von Dampf zu einem Kohlenmonoxid und Wasserstoff enthaltenden Synthesegas umgesetzt. Zumindest ein Teil des gebildeten Kohlenmonoxids kann mittels Wassergasshift zu Wasserstoff und Kohlendioxid konvertiert werden. Bei der Dampfreformierung wird ein typischerweise vorgewärmtes Gemisch aus Einsatz und Dampf durch Reaktionsrohre eines Reaktors geführt, die mit einem Katalysator befüllt sind.

Die Reaktionsrohre werden von außen befeuert, um die endothermen Reformierreaktionen ablaufen lassen zu können. Es werden Prozesstemperaturen von üblicherweise 700 bis 950 °C eingestellt, um sinnvolle Umsetzungsgrade zu erreichen. Auf Grund der hohen Prozesstemperaturen umfassen Dampfreformierungsanlagen typischerweise ein umfangreiches Wärmerückgewinnungssystem auf der Prozessgasseite und der Rauchgasseite, um Energieverluste zu minimieren und somit eine wirtschaftliche und effiziente Anlage darzustellen.

Der im Prozess benötigte Dampf wird üblicherweise durch Abwärmerückgewinnung aus dem Rauchgas und dem Synthesegas erzeugt. Ebenso kann zusätzlicher Dampf, sogenannter Überschussdampf, generiert werden, der dann anderweitig außerhalb der Dampfreformierungsanlage verwendet wird.

### Überblick

Vorliegend werden eine Anlage und ein Verfahren zur Dampfreformierung mit den Merkmalen der unabhängigen Patentansprüche vorgeschlagen. Vorteilhafte Ausgestaltungen und Weiterbildungen sind Gegenstand der abhängigen Patentansprüche sowie der nachfolgenden Beschreibung.

Das vorgeschlagene Verfahren zur Dampfreformierung umfasst ein Umsetzen eines oder mehrerer Kohlenwasserstoffe mit Dampf in einem Reformierreaktor, ein Beheizen des Reformierreaktors durch Verbrennen eines Brennstoffs und ein Ausleiten von Rauchgas aus dem Reformierreaktor über ein Rauchgasabhitzesystem. Das Rauchgasabhitzesystem umfasst einen ersten Rauchgasweg und einen zweiten Rauchgasweg, wobei das ausgeleitete Rauchgas wahlweise durch den ersten Rauchgasweg oder den zweiten Rauchgasweg oder duch den ersten und den zweiten Rauchgasweg geführt wird. Wenngleich nachfolgend überwiegend von "einem" Reformierreaktor im Singular die Rede ist, schließt dies selbstverständlich die Verwendung weiterer Reformierreaktoren nicht aus, und diese können gemeinsam an dasselbe Rauchgasabhitzesystem oder unterschiedliche Rauchgasabhitzesysteme angebunden sein.

Je nach äußeren Randbedingungen und Aufgabenstellung kann es nötig sein, eine Dampfreformierungsanlage derart auszulegen, dass durch diese gerade kein Überschussdampf erzeugt wird. Die Abwärmerückgewinnungssysteme herkömmlicher Anlagen können demzufolge so ausgelegt werden, dass nur so viel Dampf erzeugt wird, wie für die Reformierungsreaktionen benötigt wird. Dazu werden die Verbrennungsluft und der Einsatzstoff entsprechend vorgewärmt. Ebenso ist es möglich, einen Teilstrom der Einsatzgase entsprechend den Erfordernissen der Energiebilanz in einem prozessgasbeheizten Reformer umzusetzen. Damit wird die für die Dampferzeugung zur Verfügung stehende Wärme deutlich reduziert, so daß kein Überschussdampf (Exportdampf) anfällt.

Dadurch kann es in herkömmlichen Anlagen jedoch dazu kommen, dass während des Anlagenstarts und im Teillastbetrieb nicht genügend Dampf für die Prozessanforderungen produziert wird, da die Wärmeverluste in Teillast kaum, die Effizienz dagegen stark sinkt. Selbst temporäre Umfahrungen der Luftvorwärmer und Einsatzstoffvorwärmer sind u.U. nicht ausreichend, um die Feuerungsleistung und Dampfproduktion entsprechend zu erhöhen. Des Weiteren bestehen prozesstechnische Randbedingungen, die die Feuerungsleistung begrenzen, wie z.B. die Austrittstemperaturen am Reformer und den Überhitzerbündeln des Rauchgassystems.

Ausgestaltungen der vorliegenden Erfindung ermöglichen es, diese Nachteile zu überwinden, indem das Rauchgas je nach Bedarf durch die unterschiedlichen Rauchgaswege geführt wird, die jeweils eine für Anfahr- und Normal- bzw. Regelbetrieb geeignete Ausstattung mit entsprechenden Wärmeübertragern erfahren können.

Die nachfolgend angesprochenen Nachteile herkömmlicher Verfahren treten daher in Ausgestaltungen der vorliegenden Erfindung nicht auf. Ein herkömmlicher Lösungsansatz besteht darin, mittels Importdampf den Dampfmangel beim Anlagenstart oder in niedriger Teillast auszugleichen. Dieser Ansatz scheitert, wenn kein Importdampf zur Verfügung steht oder sehr aufwendig erzeugt werden muss. Ein weiterer herkömmlicher Ansatz besteht darin, Feuerungslanzen im Rauchgasabhitzesystem zu installieren (sogenanntes Duct Firing), um bei Bedarf zusätzliche Wärme in das Rausgassystem einzutragen und so die Dampfproduktion zu erhöhen. Die zusätzlichen Feuerungslanzen in der Rauchgasabhitze stellen ein komplexes System dar und erhöhen die Sicherheits- und regelungstechnischen Anforderungen erheblich, da es zu Wechselwirkungen mit dem eigentlichen Reformerfeuerungssystem kommt.

Mit der vorliegenden Erfindung und ihren Ausgestaltungen wird ein geteiltes Rauchgasabhitzesystem vorgeschlagen, wobei bevorzugte technische Details und Vorteile nachfolgend erläutert werden.

Das durch den ersten Rauchgasweg und/oder den zweiten Rauchgasweg geführte Rauchgas kann in hier vorgeschlagenen Ausgestaltungen anschließend durch einen dritten Rauchgasweg geführt werden, um im Verfahren ständig benötigte, im dritten Rauchgasweg angeordnete Wärmeübertrager zu versorgen.

In bestimmten Ausgestaltungen kann in dem ersten Rauchgasweg dem Rauchgas entzogene Wärme für eine Erwärmung von Verbrennungsluft, für eine Überhitzung von Exportdampf und für eine Erwärmung eines dem Reformierreaktor zugeführten Einsatzgemischs verwendet werden. Dem den Hauptrauchgasweg bildenden ersten Rauchgasweg, der insbesondere in einem Regelbetrieb mit Rauchgas beaufschlagt wird, enthält damit die Wärmeübertrager für die Einsatzstoffanwärmung, Luftvorwärmung, Dampferzeugung und Dampfüberhitzung.

In dem zweiten Rauchgasweg kann dagegen dem Rauchgas entzogene Wärme zu mehr als 90%, 95%, 99% oder im Wesentlichen vollständig für eine Erzeugung und/oder Überhitzung von Prozessdampf verwendet werden. Dem regulären Rauchgasweg wird ein zweiter Rauchgasweg parallelgeschaltet. Dieser zweite Rauchgasweg enthält also insbesondere einen oder mehrere zusätzliche Wärmeübertrager ausschließlich zur Dampferzeugung. Auf diese Weise kann beispielsweise beim Anfahren der erforderliche Dampf, insbesondere Prozessdampf, bereitgestellt werden.

In dem dritten Rauchgasweg kann dem Rauchgas entzogene Wärme für die Erwärmung von Verbrennungsluft und/oder zur Erzeugung von Dampf verwendet werden, so dass diese Aufgaben in entsprechenden Ausgestaltungen stets zumindest in einem miminal erforderlichen Umfang erfüllt werden können.

In hier vorgeschlagenen Ausgestaltungen können in einem ersten Betriebsmodus über 90% des über das Rauchgassystem ausgeleiteten Rauchgases durch den ersten Rauchgasweg und in einem zweiten Betriebsmodus über 90% durch den zweiten Rauchgasweg geführt werden, insbesondere jeweils vollständig. Auch andere Anteile können eingestellt werden. Mit entsprechenden Konfigurationen kann flexibel die Dampfproduktion erhöht werden, indem mehr Rauchgas in den Rauchgaskanal mit dem bzw. den zusätzlichen Dampferzeugern geleitet wird.

Wie bereits mehrfach erwähnt, kann es sich bei dem zweiten Betriebsmodus um einen Anfahrbetriebsmodus oder einen Teillastbetriebsmodus handeln und bei dem ersten Betriebsmodus um einen sich an den Anfahrbetriebsmodus anschließenden Regelbetriebsmodus bzw. einen Betriebsmodus mit höherer Last oder Volllast.

In bestimmten Ausgestaltungen kann das Rauchgas mittels eines Drosselklappensystems auf den ersten Rauchgasweg und den zweiten Rauchgasweg verteilt werden.

Weitere Ausgestaltungen können umfassen, Dampf mittels eines Dampferzeugungssystems bereitzustellen, das eine Dampftrommel umfasst, und in dem Wasser oder Dampf in dem ersten und zweiten Betriebsmodus über unterschiedliche Leitungssysteme und/oder Wärmeübertrager geführt wird.

Konkreter kann in entsprechenden Ausgestaltungen in dem dritten Rauchgasweg ein erster wärmeübertragender Apparat bereitgestellt sein, der in dem ersten Betriebsmodus als Kessespeisewasseranwärmer für in die Dampftrommel einzuspeisendes Kesselwasser und in dem zweiten Betriebsmodus als Rauchgasdampferzeuger zur Erzeugung von Dampf aus siedendem Kesselspeisewasser aus der Dampftrommel verwendet wird. Wie auch in Bezugnahme auf die Ausgestaltungen der Erfindung unten erläutert, kann auf diese Weise, d.h. durch eine entsprechende Umschaltung, eine optimale Anpassung der Wärmerückgewinnung im Anfahrbetrieb und im Regelbetrieb erfolgen.

Die vorgeschlagene Anlage zur Dampfreformierung ist zum Umsetzen eines oder mehrerer Kohlenwasserstoffe und Dampf in einem Reformierreaktor, zum Beheizen des Reformierreaktors durch Verbrennen eines Brennstoffs, und zum Ausleiten von Rauchgas aus dem einen oder den mehreren Reformierreaktoren über ein Rauchgassystem eingerichtet, wobei das Rauchgassystem einen ersten Rauchgasweg und einen zweiten Rauchgasweg umfasst und die Anlage dafür eingerichtet ist, das ausgeleitete Rauchgas wahlweise durch den ersten Rauchgasweg oder den zweiten Rauchgasweg oder den ersten und den zweiten Rauchgasweg zu führen.

Zu weiteren Merkmalen und Vorteilen einer entsprechenden Anlage und Ausgestaltungen hiervon sei auf die obigen Erläuterungen betreffend das vorgeschlagene Verfahren und seine Ausgestaltungen ausdrücklich verwiesen, da diese hierfür in gleicher Weise gelten.

Entsprechendes gilt auch für eine Anlage, die dazu eingerichtet ist, ein Verfahren gemäß einer beliebigen Ausgestaltung durchzuführen.

### Zeichnungen

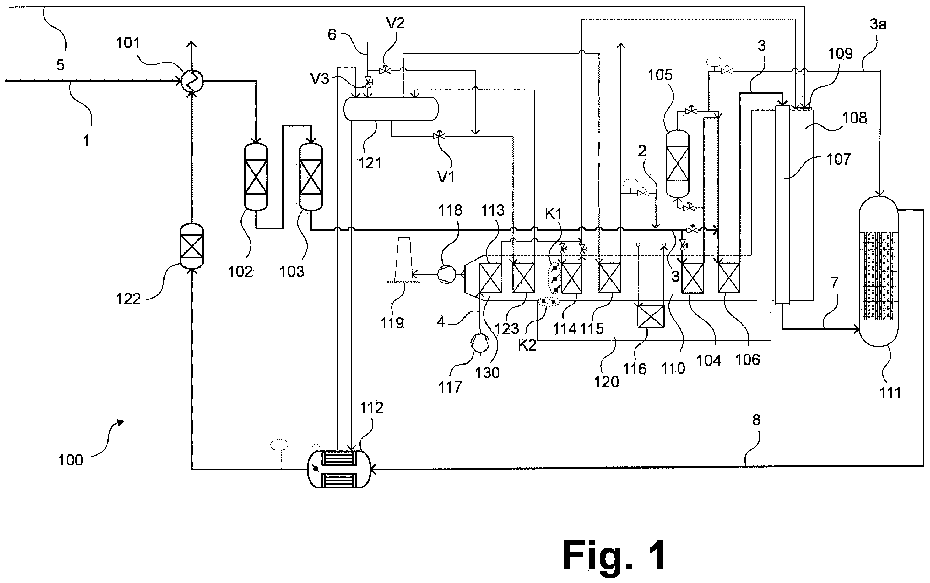

Ausführungsformen der Erfindung werden nachfolgend rein beispielhaft unter Bezugnahme auf die beigefügte Zeichnung beschrieben, wobei
Figur 1 ein Verfahren gemäß einer Ausgestaltung in einem ersten Verfahrensmodus schematisch veranschaulicht.

### Ausführungsformen

Die nachfolgend beschriebenen Ausführungsformen werden lediglich zu dem Zweck beschrieben, den Leser beim Verständnis der beanspruchten und zuvor erläuterten Merkmale zu unterstützen. Sie stellen lediglich repräsentative Beispiele dar und sollen hinsichtlich der Merkmale der Erfindung nicht abschließend und/oder beschränkend betrachtet werden. Es versteht sich, dass die zuvor und nachfolgend beschriebenen Vorteile, Ausführungsformen, Beispiele, Funktionen, Merkmale, Strukturen und/oder anderen Aspekte nicht als Beschränkungen des Umfangs der Erfindung, wie er in den Ansprüchen definiert ist, oder als Beschränkungen von Äquivalenten zu den Ansprüchen zu betrachten sind, und dass andere Ausführungsformen verwendet und Änderungen vorgenommen werden können, ohne vom Umfang der beanspruchten Erfindung abzuweichen.

Unterschiedliche Ausführungsformen der Erfindung können weitere zweckmäßige Kombinationen der beschriebenen Elemente, Komponenten, Merkmale, Teile, Schritte, Mittel usw. umfassen, aufweisen, aus ihnen bestehen oder im Wesentlichen aus ihnen bestehen, auch wenn solche Kombinationen hier nicht spezifisch beschrieben sind. Darüber hinaus kann die Offenbarung andere Erfindungen umfassen, die gegenwärtig nicht beansprucht sind, die aber in Zukunft beansprucht werden können, insbesondere wenn sie vom Umfang der unabhängigen Ansprüche umfasst sind.

Erläuterungen, die sich auf Vorrichtungen, Apparate, Anordnungen, Systeme usw. gemäß Ausführungsformen der vorliegenden Erfindung beziehen, können auch für Verfahren, Prozesse, Methoden usw. gemäß den Ausführungsformen der vorliegenden Erfindung gelten und umgekehrt. Gleiche, gleich wirkende, in ihrer Funktion einander entsprechende, baulich identisch oder vergleichbar aufgebaute Elemente, Verfahrensschritte usw. können mit identischen Bezugszeichen angegeben sein.

Die nachfolgenden Erläuterungen und Definitionen, die einige Grundlagen der Erfindung betreffen, können für alle oder einen Teil der hier vorgestellten Ausgestaltungen gelten, und die Erläuterung bestimmter Aspekte im Zusammenhang mit nur einem Teil oder einer der Ausgestaltungen soll nicht dahingehend verstanden werden, dass diese Aspekte nicht auch mit anderen oder allen Ausgestaltungen, soweit technisch möglich und sinnvoll, verwirklicht sein können.

Sämtliche hier verwendeten Prozentangaben können sich auf Mol-, Mengen- oder Volumenanteile beziehen. Druckangaben in bar sind, soweit nicht anders erläutert, insbesondere als Absolutdrücke zu verstehen.

Die Konjunktion "und/oder" soll, wenn in einer Aufzählung vor dem letzten Begriff der Aufzählung verwendet, so verstanden werden, dass alle in der Aufzählung zuvor genannten Begriffe in beliebiger Weise miteinander kombiniert werden können. Mit anderen Worten ist mit "A, B und/oder C" "A und/oder B und/oder C" oder "wenigstens eines der Elemente A, B und C in beliebiger Kombination" gemeint.

Ist vorliegend von einem "Teil" eines Stoffstroms die Rede, kann es sich hierbei um einen Mengenanteil mit gleicher Zusammensetzung handeln, der von einem Ausgangsstrom lediglich abgezweigt wurde, aber auch um einen Anteil abweichender Zusammensetzung und ggf. nur eine Komponente des Ausgangsstroms, der mittels eines Verfahrens wie Kondensation, Evaporation, Sieden, Destillieren, Rektifizieren, Absorbieren, Adsorbieren, Flashen, Membrantrennen, Abscheiden oder dergleichen gebildet wird oder bei einem entsprechenden Schritt als Rest verbleibt. Ein "Teil" kann auch nach einer Kombination beliebiger der vorstehend benannten Schritte vorliegen, beispielsweise nach trenntechnischer Bearbeitung abgezweigten Anteils.

In Figur 1 ist eine Anlage gemäß einer hier vorgeschlagenen Ausgestaltung veranschaulicht und insgesamt mit 100 bezeichnet.

Der Anlage 100 wird ein kohlenwasserstoffhaltiger Einsatz 1 zugeführt, beispielsweise Erdgas, Flüssiggas oder Naphtha. Der Einsatz 1 wird in einem Einsatzanärmer 101 erwärmt und danach durch eine Hydriereinheit 102 und eine Entschwefelungseinheit 103 geführt. Durch Beimischung von Dampf 2 wird ein Einsatzgemisch 3 gebildet, das ggf. nach einer unten erläuterten weiteren Behandlung durch Reaktionsrohre 107 eines Reformierreaktors 108 geführt wird.

Die Dampfreformierung an sich wird in hier vorgeschlagenen Ausgestaltungen in grundsätzlich bekannter Weise durchgeführt, wobei zu den zugrunde liegenden Reaktionen und der üblichen Realisierung der verwendeten Apparate insbesondere auf übliche Fachliteratur wie beispielsweise den Artikel "Gas Production" in Ullmann's Encyclopedia of Industrial Chemistry verwiesen werden kann.

Bei der Dampfreformierung (engl. Steam Methane Reforming, SMR) handelt es sich um den häufigsten Weg, um Wasserstoff in großem Maßstab zu produzieren. Der Prozess beinhaltet die Reaktion von Wasserdampf mit einem Kohlenwasserstoff, oft Erdgas, um Wasserstoff zu erzeugen. Diese Reaktion findet in der Regel bei hohen Temperaturen von 700 bis 1.100 °C und Drücken in Gegenwart eines geeigneten Katalysators (Reformierkatalysator) statt.

Die Basisreaktion bei der Dampfreformierung kann vereinfacht mit folgender Reaktionsgleichung dargestellt werden:

CH₄ + H₂O → CO + 3 H₂

In einem weiteren Schritt, der eingangs erwähnten Wassergasshift, kann das erzeugte Kohlenmonoxid mit zusätzlichem Wasserdampf reagieren, um weiteren Wasserstoff und Kohlendioxid zu bilden:

CO + H₂O → CO₂ + H₂

Unter dem Begriff "Synthesegas" wird hier ein Gasgemisch verstanden, das im trockenen Anteil, d.h. abzüglich Wasser, falls noch vorhanden, zu mehr als 90% aus Wasserstoff sowie Kohlenmonoxid und/oder Kohlendioxid besteht. Synthesegas kann als Ausgangsmaterial für diverse Synthesen, beispielsweise von Ammoniak und Methanol, dienen. Wasserstoff kann auch als potentieller Energieträger für Brennstoffzellen und andere Anwendungen angesehen werden.

Der Reformierreaktor 108 wird unter Verwendung von Brennern befeuert, von denen nur ein Brenner 109 schematisch angedeutet ist. Gebildetes Rauchgas wird wahlweise über einen ersten Rauchgasweg 110 und/oder einen zweiten Rauchgasweg 120 ausgeführt, wobei der erste Rauchgasweg 110 und der zweite Rauchgasweg 120 in einen gemeinsamen dritten Rauchgasweg 130 münden, und wobei die über den ersten Rauchgasweg 110 und den zweiten Rauchgasweg 120 geführten Anteile des Rauchgases über ein erstes Drosselklappensystem K1 und ein zweites Drosselklappensystem K2 eingestellt werden können.

In dem ersten Rauchgasweg 110 sind ein erster und zweiter Einsatzüberhitzer 104, 106, ein zweiter Verbrennungsluftvorwärmer 114 und ein Exportdampfüberhitzer 115 angeordnet. Falls der erste Rauchgasweg 110 aktiv ist, d.h. mit Rauchgas durchströmt wird, kann das Einsatzgemisch in einstellbaren Anteilen durch den ersten Überhitzer 104 und den zweiten Überhitzer 106 geführt werden. Durch den ersten Überhitzer 104 geführtes Einsatzgemisch 3 kann danach wiederum zu einem einstellbaren Anteil einem Prefreformer 105 zugeleitet werden. Stromab hiervon erfolgt eine Vereinigung mit einem nicht durch den ersten Überhitzer 104 geführten Anteil und eine weitere Überhitzung in einem zweiten Überhitzer 106.

Im zweiten Rauchgaszug 120 befindet sich ein Anfahrdampferzeuger 116, der an eine weiter unten erläuterte Dampftrommel 121 angebunden ist, und in dem dritten Rauchgasweg 130 ein erster Verbrennungsluftvorwärmer 113 und ein in einem Anfahrbetrieb als Kessespeisewasseranwärmer und einem Regelbetrieb als Rauchgasdampferzeuger betriebener Apparat 123. Das Rauchgas wird mittels eines Gebläses 118 durch den ersten und/oder zweiten Rauchgasweg 110, 120 sowie anschließend den dritten Rauchgasweg 130 gezogen und, ggf. nach einer nicht gezeigten Rauchgasreinigung, einem Kamin 119 zugeführt.

Verbrennungsluft 4 wird mittels eines Gebläses 117 durch den ersten Verbrennungsluftvorwärmer 113 geführt und, falls der erste Rauchgasweg 110 aktiv ist, ggf. durch den zweiten Verbrennungsluftvorwärmer 114. Die entsprechend vorgewärmte Verbrennungsluft 4 wird danach mit Brenngas 5 dem Brenner 109 zugeführt. Zur Bereitstellung des Dampfs 2 wird die erwähnte Dampftrommel 121 verwendet, der Kesselspeisewasser 6 zugeführt wird, wobei der Dampftrommel 121 Ventile V1, V2 und V3 zugeordnet sind. Den Reaktionsrohren 107 entnommenes Synthesegas 7 wird einer weiteren Reformiereinheit 111 zugeführt, die auch mit einem Seitenstrom 3a aus dem Prereformer 105 gespeist wird. In dieser Reformiereinheit 111 wird die fühlbare Wärme des Synthesegasstromes 7 genutzt, in dem der Steitenstrom 3a aus dem Prerefromer 109 analog den endothermen Reformierprozessen in dem Reformierreaktor 108 ebenso in Synthesegas umgesetzt wird. Aus der Reformiereinheit 111 tritt das nun etwas abgekühlte Synthesegas 107 vermischt mit dem nun in Synthesegas umgewandelten Seitenstrom 3a als Synthesegasgemisch 8 aus. Das hieraus entnommene Synthesegas 8 wird durch einen Synthesegaskühler 112, der an die Dampftrommel 121 angebunden ist, geleitet, danach einer Kohlenmonoxidkonvertierung 122 unterworfen, und schließlich in dem Einsatzerwärmer 101 weiter abgekühlt.

Hier vorgeschlagene Aspekte umfassen insbesondere einen Anfahrbetrieb und einen Regelbetrieb, wobei insbesondere die Drosselklappensysteme K1 und K2 und die Ventile V1, V2, V3 zum Einsatz kommen. Im Anfahrbetrieb ist Ventil V2 geöffnet und Ventile V1 und V3 sind geschlossen, so dass Kesselspeisewasser 6 zunächst unter Umgehung der Dampftrommel 121 durch den Apparat 123 geführt und das angewärmte Kesselspeisewasser in die Dampftrommel 121 eingespeist wird. Somit wird in dem Anfahrbetrieb Kesselspeisewasser direkt durch den Apparat 123 geleitet. Dadurch übernimmt dieser Apparat 123 auch eine Funktion als Kesselspeisewasseranwärmer, wobei das Rauchgas in dem Anfahrbetrieb in dem Apparat 123 weiter abgekühlt wird als im Regelbetrieb. Dadurch wird im Anfahrbetrieb die Dampfproduktion maximiert.

Im Regelbetrieb sind die Ventile V3 und V1 geöffnet und Ventil V2 ist geschlossen. Im Regelbetrieb wir der Apparat 123 mit siedenem Kesselspeisewasser aus der Dampftrommel 121 versorgt und kann daher das Rauchgas weniger abkühlen als im Anfahrbetrieb und noch restliche nutzbare Wärme für die Verbrennungsluftanwärmung in Apparat 113 im Rauchgas belassen. Diese Flexibilität zwischen Maximierung der Dampfproduktion einerseits (V1, V3 offen, V2 geschlossen) und Minmierung des Brennstoffbedarfs durch Luftvorwärmung (V2 offen, V1, V3 offen) erlaubt die optimale Anpassung der Wärmerückgewinnung im Anfahrbetrieb und im Regelbetrieb.

Das Kesselspeisewasser hat gewöhnlich eine Temperatur von 100 bis 110 °C, entsprechend den Siedebedingungen im zugehörigen Entgaser (z.B. 1,5 bar Absolutdruck) . Somit kann man Rauchgas in einem Kesselspeisewasseranwärmer am kalten Ende des Wärmeübertragers ungefähr auf 150 °C abkühlen. In einem Dampferzeuger, der über Downcomer und Riser an einer Dampftrommel hängt, liegen überall die Siedebedingungen des Kesselspeisewassers vor, z.B. bei 50 bar Absolutdruck von Sattdampf bei 265 °C. Somit kann man in einem Dampferzeuger das Rauchgas sinnvollerweise nur auf 300 °C abkühlen. Um die Rauchgastemperatur auch unterhalb von 300 °C für die Produktion von Dampf bei 50 bar Absolutdruck zu nutzen, kann man die restliche Wärme in einem Kesselspeisewasseranwärmer nutzen.

Die vorstehenden Erläuterungen teilweise wiederholend, arbeitet im Anfahrbetrieb der Apparat 123 nicht als Dampferzeuger sondern als Kesselspeiseanwärmer. Der Wärmeeintrag ins gemeinsame Dampfsystem erfolgt somit im Anfahrbetrieb über die Apparate 123, 116 und 112. Alle drei Wärmeübertrager 123, 116 und 112 sind mittels Downcomern und Risern an die Dampftrommel 121 angebunden und arbeiten alle drei als Dampferzeuger im Regelbetrieb.

Apparat 123 vermag die Rauchgastemperatur im Anfahrbetrieb weiter abzukühlen als im Regelbetrieb. Damit wird im Anfahrbetrieb die Luftvorwärmung reduziert, womit spezifisch mehr Brennstoff benötigt wird, um trotzdem die gleichen Temperaturen im Reformer wie im Regelbetrieb zu erreichen. Dieser spezifischer höhere Brennstoffbedarf spiegelt sich letztendlich in einer höheren Dampfproduktion wieder.

Sämtliche hierin beschriebenen Wärmeübertrager können in an sich bekannter Weise ausgebildet sein und insbesondere hinsichtlich der Anforderungen hoher Temperaturen und korrosiver Umgebungen adaptiert sein. Aufgrund der hohen Temperaturen und der potenziell korrosiven Natur der Rauchgase können hochhitzebeständige Materialien wie Nickellegierungen oder Edelstähle verwendet werden. Diese Materialien widerstehen der Korrosion durch Rauchgase und halten den hohen Betriebstemperaturen stand.

Die Wärmeübertrager können als Rohrbündelwärmeübertrager, Plattenwärmeübertrager oder Spiralwärmeübertrager ausgelegt sein. Rohrbündelwärmeübertrager sind am häufigsten und bestehen aus einem Bündel von Rohren, durch die ein Fluid (wie Dampf oder Wasser) fließt, während das Rauchgas außen um die Rohre herumgeführt wird.

Um die Wärmeübertragung zu optimieren, können die Wärmeübertrager beispielsweise Gegenstrom- oder Kreuzstrom-Konfigurationen angeordnet.

Gegenstromkonfigurationen sind effizienter, da sie einen höheren mittleren Temperaturgradienten zwischen den Medien über die gesamte Länge des Wärmeübertragers aufrechterhalten.

Wenngleich zuvor bestimmte Merkmale hier vorgeschlagener Ausgestaltungen in bestimmter Kombination beschrieben wurden, können andere Ausgestaltungen auch abweichende Kombinationen umfassen, wobei grundsätzlich eine Beschränkung nur durch die Grenzen technischer Sinnhaftigkeit und Praktikabilität gegeben ist.

## Patentansprüche

1. Verfahren zur Dampfreformierung, das ein Umsetzen eines oder mehrerer Kohlenwasserstoffe (1) und Dampf (2) in einem Reformierreaktor (108), ein Beheizen des Reformierreaktors (108) durch Verbrennen eines Brennstoffs (5) und ein Ausleiten von Rauchgas aus dem Reformierreaktor (108) über ein Rauchgassystem (110, 120) umfasst, wobei das Rauchgassystem (110, 120) einen ersten Rauchgasweg (110) und einen zweiten Rauchgasweg (120) umfasst, und wobei das ausgeleitete Rauchgas wahlweise durch den ersten Rauchgasweg (110) oder den zweiten Rauchgasweg (120) oder den ersten (110) und den zweiten Rauchgasweg (120) geführt wird.

2. Verfahren nach Anspruch 1, bei dem die Gesamtmenge des durch den ersten Rauchgasweg (110) und/oder den zweiten Rauchgasweg (120) geführten Rauchgases durch einen dritten Rauchgasweg (130) weitergeführt wird.

3. Verfahren nach Anspruch 2, bei dem im ersten Rauchgasweg (110) dem Rauchgas entzogene Wärme für eine Erwärmung von Verbrennungsluft, Überhitzung von Exportdampf und Erwärmung eines dem Reformierreaktor (110) zugeführten Einsatzgemischs (3) verwendet wird.

4. Verfahren nach Anspruch 2 oder 3, bei dem im zweiten Rauchgasweg (120) dem Rauchgas entzogene Wärme zu mehr als 90% für eine Erzeugung und/oder Überhitzung von Prozessdampf verwendet wird.

5. Verfahren nach einem der Ansprüche 2 bis 4, bei dem im dritten Rauchgasweg (130) dem Rauchgas entzogene Wärme für eine Erwärmung von Verbrennungsluft und/oder Kesselspeisewasser und/oder zur Erzeugung von Dampf verwendet wird.

6. Verfahren nach einem der Ansprüche 2 bis 5, bei dem in einem ersten Betriebsmodus über 90% des über das Rauchgassystem ausgeleiteten Rauchgases durch den ersten Rauchgasweg (110) und in einem einem zweiten Betriebsmodus über 90% des über das Rauchgassystem ausgeleiteten Rauchgases durch den zweiten Rauchgasweg (120) geführt werden.

7. Verfahren nach Anspruch 6, bei dem der zweite Betriebsmodus ein Anfahrbetriebsmodus und der erste Betriebsmodus ein sich an den Anfahrbetriebsmodus anschließender Regelbetriebsmodus ist.

8. Verfahren nach einem der Ansprüche 2 bis 7, bei dem die das Rauchgas mittels eines Drosselklappensystems (K1, K2) auf den ersten Rauchgasweg (110) und den zweiten Rauchgasweg (120) verteilt wird.

9. Verfahren nach einem der Ansprüche 2 bis 8, das umfasst, Dampf mittels eines Dampferzeugungssystems mit einer Dampftrommel (121) bereitzustellen, wobei in dem Dampferzeugungssystem Kesselspeisewasser und/oder Dampf in dem ersten und zweiten Betriebsmodus über unterschiedliche Leitungssysteme und/oder Wärmeübertrager geführt werden.

10. Verfahren nach Anspruch 9, bei dem in dem dritten Rauchgasweg (130) ein erster wärmeübertragender Apparat (123) bereitgestellt ist, der in dem ersten Betriebsmodus als Kessespeisewasseranwärmer für in die Dampftrommel (121) einzuspeisendes Kesselwasser und in dem zweiten Betriebsmodus als Rauchgasdampferzeuger zur Erzeugung von Dampf aus siedendem Kesselspeisewasser aus der Dampftrommel (121) verwendet wird.

11. Anlage (100) zur Dampfreformierung, die zum Umsetzen eines oder mehrerer Kohlenwasserstoffe (1) und Dampf (2) in einem Reformierreaktor (108), zum Beheizen des Reformierreaktors (108) durch Verbrennen eines Brennstoffs (5), und zum Ausleiten von Rauchgas aus dem einen oder den mehreren Reformierreaktoren (108) über ein Rauchgassystem (110, 120) eingerichtet ist, wobei das Rauchgassystem (110, 120) einen ersten Rauchgasweg (110) und einen zweiten Rauchgasweg (120) umfasst und die Anlage dafür eingerichtet ist, das ausgeleitete Rauchgas wahlweise durch den ersten Rauchgasweg (110) oder den zweiten Rauchgasweg (120) oder den ersten (110) und den zweiten Rauchgasweg (120) zu führen.

12. Anlage (100) nach Anspruch 11, die zur Durchführung eines Verfahrens nach einem der Ansprüche 1 bis 10 eingerichtet ist.
